Europäisches Patentamt

European Patent Office

Office européen des brevets

(19)

(11) **EP 1 055 170 B1**

(12) **FASCICULE DE BREVET EUROPEEN**

(45) Date de publication et mention
de la délivrance du brevet:
**11.05.2005 Bulletin 2005/19**

(21) Numéro de dépôt: **99901627.2**

(22) Date de dépôt: **26.01.1999**

(51) Int Cl.⁷: **G06F 9/40**

(86) Numéro de dépôt international:
**PCT/FR1999/000145**

(87) Numéro de publication internationale:
**WO 1999/041660 (19.08.1999 Gazette 1999/33)**

(54) **MICROPROCESSEUR COMPORTANT UN SYSTEME DE SYNCHRONISATION AVEC UN EVENEMENT ASYNCHRONE ATTENDU**

MIKROPROZESSOR MIT EINEM SYSTEM ZUR SYNCHRONISATION MIT EINEM ERWARTETEN ASYNCHRONEN EREIGNIS

MICROPROCESSOR COMPRISING A SYNCHRONISING SYSTEM WITH AN EXPECTED ASYNCHRONOUS EVENT

(84) Etats contractants désignés:
**CH DE ES FR GB IT LI NL**

(30) Priorité: **12.02.1998 FR 9801668**

(43) Date de publication de la demande:
**29.11.2000 Bulletin 2000/48**

(73) Titulaire: **Inside Contactless
13856 Aix en Provence Cedex 3 (FR)**

(72) Inventeur: **CHARRAT, Bruno, Bâtiment C
F-13090 Aix en Provence (FR)**

(74) Mandataire: **Marchand, André et al
OMNIPAT,
24 Place des Martyrs de la Résistance
13100 Aix-en-Provence (FR)**

(56) Documents cités:
**EP-A- 0 395 210          US-A- 5 481 230**

• **ANONYMOUS: "High Speed Input/Output Delay
Counter. November 1973." IBM TECHNICAL
DISCLOSURE BULLETIN, vol. 16, no. 6,
novembre 1973, pages 1871-1873, XP002084545
New York, US**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

# Description

La présente invention concerne un microprocesseur comprenant un compteur pour mesurer un intervalle de temps en fonction d'une consigne de comptage et d'un signal d'horloge de comptage.

La présente invention concerne plus particulièrement la synchronisation d'un microprocesseur avec un événement asynchrone attendu, c'est-à-dire dont l'apparition ou la fréquence d'apparition n'est pas synchronisée avec l'horloge interne du microprocesseur.

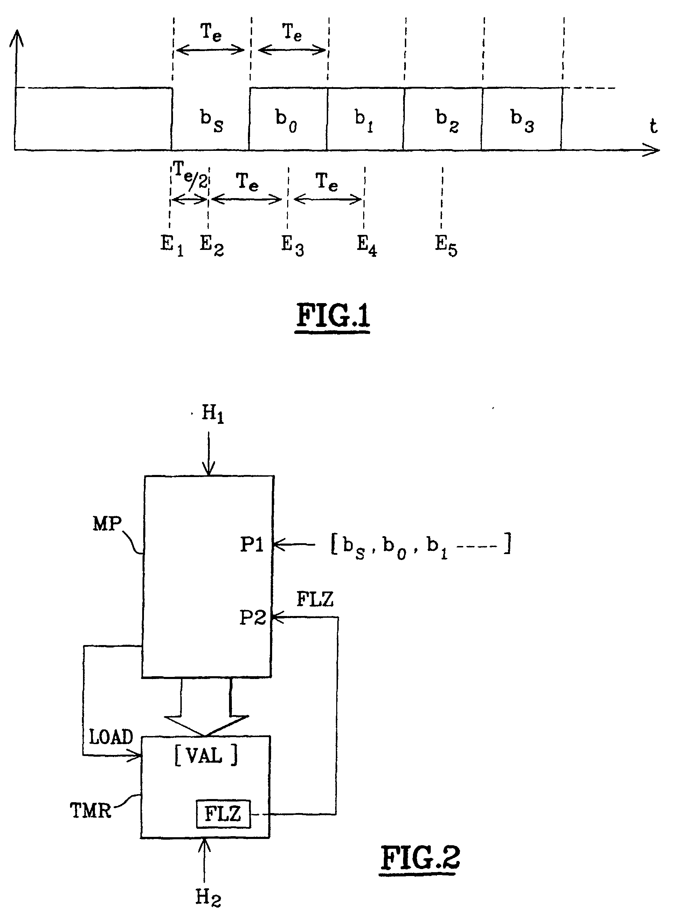

A titre d'exemple, la figure 1 représente une suite de bits asynchrone comprenant classiquement un bit de démarrage ou "bit de start" bs, de valeur nulle, suivi de bits b0, b1, b2, b3... constitutifs d'un message. Ces différents bits sont séparés par des intervalles de temps constants Te correspondant à la période d'un signal d'horloge externe He. De façon classique, la réception de la suite de bits est faite avec un décalage d'un demi-cycle d'horloge He et comprend les étapes suivantes :

- détecter le passage à 0 du bit bs (événement E1, apparition du bit de start),
- quand un intervalle de temps égal à Te/2 s'est écoulé depuis l'événement E1 (événement E2), lire le bit bs et vérifier que celui-ci est toujours à 0,
- quand un intervalle de temps égal à Te s'est écoulé depuis l'événement E2 (événement E3), lire le premier bit b0 du message,
- quand un intervalle de temps égal à Te s'est écoulé depuis l'événement E3 (événement E4), lire le deuxième bit b1 du message, etc..

La figure 2 illustre schématiquement la mise en oeuvre de cette méthode au moyen d'un microprocesseur MP piloté par un signal d'horloge H1 de période T1 qui n'est pas synchronisé à l'horloge externe He de la transmission de données. Le microprocesseur MP reçoit sur un port P1 la suite de bits de la figure 1. Un compteur TMR de type "timer", piloté par un signal d'horloge H2 de période T2, enregistre une consigne de comptage VAL quand un signal de chargement LOAD lui est appliqué. Lorsque le compteur TMR atteint la valeur 0 après chargement de la consigne VAL, un drapeau FLZ du compteur passe à 0. Ce drapeau FLZ est appliqué sur un port P2 du microprocesseur. Avec cet agencement classique, la méthode décrite ci-dessus se traduit par la séquence de programmation suivante, exprimée en termes généraux :

(1) **quand** le port P1 passe à zéro (événement E1, apparition du bit bs), charger dans le compteur TMR une consigne de comptage VAL1 correspondant à une durée de comptage VAL1$_x$T2 égale à Te/2,
(2) **quand** le port P2 (drapeau FLZ) passe à 0 (événement E2) charger dans compteur une consigne de comptage VAL2 correspondant à une durée de comptage VAL2$_x$T2 égale à Te, puis lire le bit bs sur le port P1 et vérifier que ce bit est bien égal à 0,
(3) **quand** le port P2 passe à 0 (événement E3), charger dans compteur la consigne de comptage VAL2, puis lire le bit b0 sur le port P1,
(4) **quand** le port P2 passe à 0 (événement E4), charger dans le compteur avec la consigne de comptage VAL2, puis lire le bit b1 sur le port P1,...
(ainsi de suite pour la lecture des bits suivants).

Dans la séquence ci-dessus, le chargement de chaque nouvelle consigne de comptage VAL1 ou VAL2 est effectué immédiatement après la réalisation de chaque événement et avant la lecture des bits, afin d'éviter un décalage progressif du programme vis-à-vis du flux des données binaires asynchrones. Malgré cette précaution, un décalage temporel peut intervenir entre le moment où l'événement attendu se réalise effectivement et le moment où cet événement est détecté, c'est-à-dire le moment où la condition **"quand"** est satisfaite dans le programme ci-dessus. Ce décalage est imputable aux méthodes classiques de détection d'événements, par scrutation ("polling") ou par interruption. Rappelons que la scrutation consiste en une surveillance cyclique, par une boucle de programme, d'un point du microprocesseur, par exemple les ports P1 et P2. Cette méthode nécessite plusieurs cycles machine (horloge H1) pour être exécutée. Le décalage apparaissant entre la réalisation de l'événement et sa détection effective est aléatoire. Il peut être nul si l'événement intervient au moment exact de la scrutation du port, ou égal à un ou plusieurs cycles machine dans le cas contraire. D'autre part, la méthode de détection par interruption consiste à associer un signal d'interruption prioritaire à l'événement à détecter. Lorsque l'événement se réalise, le microprocesseur est envoyé dans un sous-programme d'interruption pour chargement du compteur. Ce sous-programme comprend un certain nombre d'opérations à réaliser ainsi qu'une instruction de renvoi à la suite du programme à exécuter. Cette méthode, comme la précédente, génère un décalage entre l'instant où l'événement se produit et l'instant où une nouvelle consigne de comptage est effectivement chargée dans le compteur.

De plus, le chargement d'un compteur n'est pas une opération instantanée et introduit un décalage supplémentaire. Le microprocesseur doit en effet lire la consigne de comptage, l'appliquer sur un bus de données pour la présenter à l'entrée du compteur, puis appliquer le signal de chargement LOAD, ces opérations pouvant représenter plusieurs cycles machine.

Dans de nombreuses applications, ces divers décalages sont négligeables devant les intervalles de temps Te/2 et Te, l'horloge H1 du microprocesseur et l'horloge de comptage H2 étant identiques et très rapides devant l'horloge externe He. Toutefois, dans le cadre de la réalisation d'un microprocesseur destiné aux cartes à puces et autres dispositifs électroniques portables, ces retards peuvent devenir critiques et conduire à des dysfonctionnements. En particulier, les microprocesseurs des cartes à puce sans contact reçoivent par induction magnétique des données numériques à haut débit, à une cadence qui, bien qu'inférieure à l'horloge interne H1, est suffisamment élevée pour que les cycles machines pouvant être perdus dans une boucle de scrutation ou dans un sous-programme d'interruption ne soient pas négligeables. De plus, dans ces applications, le signal d'horloge externe He de la transmission ainsi que le signal d'horloge de comptage H2, extraits de la fréquence porteuse Fac d'un champ magnétique alternatif, peuvent être plus rapides que l'horloge interne H1 du microprocesseur. Les signaux He et H2 peuvent être par exemple de 13 MHz et l'horloge interne H1 de 1 MHz.

Le document EP-A-0 395 210 illustre les inconvénients des méthodes de détection d'évènement par interruption. Dans ce document, des données envoyées à un microprocesseur sont reçues dans une pile "FIFO" de capacité limitée. Le remplissage de la pile FIFO est surveillé par un compteur qui soustrait le nombre d'évènements "lecture dans la pile" au nombre d'évènements "écriture dans la pile". Quand le nombre d'écritures moins le nombre de lectures dépasse un certain seuil, un signal d'interruption est émis afin d'indiquer au microprocesseur que la pile doit être vidée. Ce seuil est choisi inférieur à la capacité de la pile pour tenir compte de la lenteur relative du microprocesseur à traiter l'interruption et éviter un débordement de la pile. Par ailleurs, dans ce document, les données sont reçues de façon synchrone. Leur réception ne nécessite pas la surveillance d'un port mais la surveillance du remplissage de la pile. Le compteur est un compteur d'évènements (écriture et lecture de la pile) et n'est pas un compteur de temps.

Ainsi, la présente invention a pour objectif de prévoir un moyen permettant de synchroniser avec précision un microprocesseur avec un événement asynchrone, ou de synchroniser un microprocesseur à une horloge plus rapide que son horloge interne.

Cet objectif est atteint par la prévision d'un microprocesseur du type ci-dessus, comprenant des moyens de détection à logique câblée d'au moins un événement attendu agencés pour appliquer immédiatement au compteur un signal de chargement d'une consigne de comptage lorsque l'événement attendu se réalise.

Ces moyens de détection étant à logique câblée et agencés pour que la détection d'un ou plusieurs événements provoque la mise à jour du compteur, on s'affranchit des décalages provoqués par les méthodes classiques de scrutation ou d'interruption. En effet, le temps de réaction d'un circuit à logique câblée, c'est-à-dire le temps de commutation de portes logiques, peut être considéré comme négligeable.

Selon un mode de réalisation, les moyens de détection sont agencés pour détecter les événements suivants : l'expiration d'un intervalle de temps, et le changement de valeur d'un signal logique quelconque.

Selon un mode de réalisation, les moyens de détection sont programmables et comprennent au moins un registre pour recevoir au moins un code d'au moins un événement à détecter.

Selon un mode de réalisation, les moyens de détection comprennent des moyens pour désactiver le microprocesseur lorsqu'ils sont activés, et réactiver le microprocesseur lorsque l'événement attendu se réalise. On place ainsi le microprocesseur dans un état de veille pendant l'attente d'un événement, de manière à diminuer sa consommation électrique.

Selon un mode de réalisation, les moyens de détection désactivent le microprocesseur en bloquant l'application d'un signal d'horloge interne au coeur du microprocesseur.

Selon un mode de réalisation, le microprocesseur comprend des moyens de décodage et de traitement d'une instruction d'attente d'un événement, agencés pour, sur réception de l'instruction d'attente : présenter à l'entrée du compteur une consigne de comptage, fournir aux moyens de détection un code de l'événement à détecter, puis activer les moyens de détection.

Selon un mode de réalisation, le microprocesseur comprend des moyens de décodage et de traitement d'une instruction d'attente d'un événement comportant un code de l'événement à détecter ainsi qu'une consigne de comptage fournie sous forme directe ou indexée.

Selon un mode de réalisation, les moyens de détection comprennent des moyens de production de codes événements lorsque des événements prédéterminés se produisent en des points prédéterminés du microprocesseur, et des moyens de comparaison d'un code événement délivré par les moyens de production avec le code événement d'un événement attendu.

Selon un mode de réalisation, le compteur reçoit un signal d'horloge de comptage différent d'un signal d'horloge interne du microprocesseur.

Selon un mode de réalisation, le microprocesseur comprend des moyens pour extraire le signal d'horloge de comptage de la fréquence porteuse d'un champ magnétique alternatif.

La présente invention concerne également un procédé de synchronisation d'un microprocesseur avec un événement attendu, le microprocesseur comprenant un compteur pour mesurer un intervalle de temps en fonction d'une consigne de comptage et d'un signal d'horloge de comptage, comprenant les étapes consistant à : prévoir un circuit à logique câblée pour détecter l'événement attendu ; présenter une consigne de comptage à l'entrée du compteur ; lorsque l'événement attendu se réalise, appliquer immédiatement au compteur un signal de chargement de la consigne de comptage présente à l'entrée du compteur, le signal de chargement étant délivré par le circuit de détection à logique câblée avec un délai minimal correspondant à un temps de commutation de portes logiques.

Selon un mode de réalisation, l'événement correspond à l'écoulement d'un intervalle de temps déterminé par une consigne de comptage précédemment chargée dans le compteur.

Selon un mode de réalisation, le microprocesseur est désactivé pendant l'attente d'un événement.

Selon un mode de réalisation, le microprocesseur est réactivé après que le signal de chargement a été appliqué au compteur.

Selon un mode de réalisation, le microprocesseur est désactivé et réactivé par blocage et rétablissement d'un signal d'horloge interne appliqué au coeur du microprocesseur.

Ces caractéristiques et avantages ainsi que d'autres de la présente invention seront exposés plus en détail dans la description suivante d'un microprocesseur selon l'invention, en relation avec les figures jointes parmi lesquelles :

- la figure 1 précédemment décrite représente les bits d'une transmission de données asynchrones,
- la figure 2 est le schéma classique d'un circuit à microprocesseur agencé pour la détection de données asynchrones,
- la figure 3 représente sous forme de blocs un microprocesseur selon l'invention comportant un système de synchronisation selon l'invention,
- la figure 4 représente de façon plus détaillée certains éléments du système et du microprocesseur de la figure 3, et
- la figure 5 est un chronogramme illustrant divers signaux logiques apparaissant dans le système de synchronisation de la figure 3.

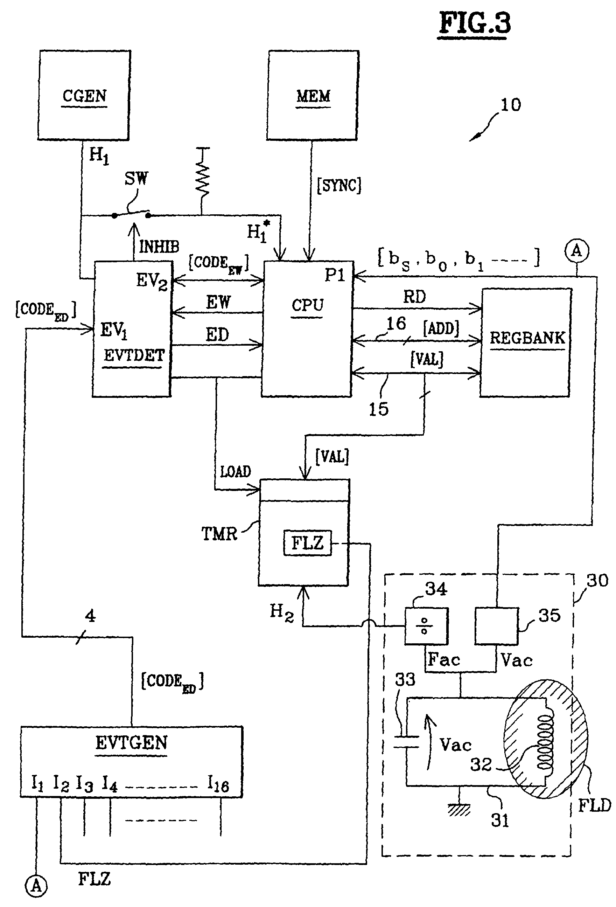

La figure 3 représente un microprocesseur 10 comprenant classiquement une unité centrale CPU connectée à un bus de données 15 et à un bus d'adresses 16, une mémoire programme MEM, une banque de registre REGBANK et un générateur d'horloge CGEN délivrant le signal d'horloge interne H1 du microprocesseur, appliqué à l'unité CPU. On retrouve par ailleurs le compteur TMR décrit au préambule, piloté par un signal d'horloge de comptage H2. La banque REGBANK et le compteur TMR sont connectés au bus de données 15 en tant qu'éléments périphériques de l'unité CPU, et des adresses ADD de registres peuvent être envoyées à la banque REGBANK par l'intermédiaire du bus d'adresses 16.

Selon l'invention, le microprocesseur 10 comprend un circuit détecteur d'événements EVTDET à logique câblée assurant la détection d'événements devant être pris en compte au cours de l'exécution d'un programme. Comme cela ressort de l'exemple donné au préambule, le terme "événement" désigne de façon classique le fait qu'un signal logique change de valeur en un point du microprocesseur. L'événement peut être le passage à 0 du signal, son passage à 1, ou simplement son changement d'état (de 1 à 0 ou de 0 à 1). Selon les besoins et les applications, le signal à surveiller peut être prélevé sur un bus interne ou un port du microprocesseur, à la sortie du compteur TMR, ou être un drapeau ("flag") du microprocesseur. Le changement de la valeur du signal peut constituer en lui-même l'événement attendu ou être la traduction en logique binaire d'un événement quelconque dont dépend le déroulement d'un programme (par exemple l'écoulement d'une durée de comptage).

Le détecteur EVTDET est connecté par une entrée EV1 à la sortie d'un générateur d'événements EVTGEN et reçoit sur une autre entrée EV2 le code $CODE_{EW}$ d'un événement à attendre, délivré par l'unité CPU. Le détecteur EVTDET délivre le signal LOAD de chargement du compteur TMR ainsi qu'un signal ED ("Event Detected") signifiant qu'un événement attendu s'est produit. Enfin, le détecteur EVTDET est activé par un signal EW ("Event Wait") d'attente d'un événement, délivré par l'unité CPU.

Le générateur d'événements EVTGEN est un circuit codeur dont les entrées, ici 16 entrées I1 à I16, sont connectées à divers points à surveiller du microprocesseur. Le générateur EVTGEN délivre sur l'entrée EV1 du détecteur EVTDET un code $CODE_{ED}$ de l'événement détecté, codé ici sur quatre bits.

Le schéma de la figure 3 illustre une application de l'invention correspondant au problème technique décrit au préambule, c'est-à-dire la réception de données asynchrones par un microprocesseur de carte à puce sans contact. On trouve ainsi sur la figure 3 un circuit classique 30 de transmission de données par induction magnétique, comprenant un circuit résonant 31 formé par une bobine d'antenne 32 et une capacité 33 en parallèle, ainsi qu'un circuit diviseur 34 et un circuit décodeur/démodulateur 35 connectés aux bornes du circuit résonant. Quand la bobine 32 est plongée dans un champ magnétique alternatif FLD de fréquence Fac modulé en amplitude émis par un lecteur de cartes à puce, une tension alternative induite Vac apparaît. La fréquence Fac de la tension Vac est divisée par le circuit 34 qui délivre le signal d'horloge de comptage H2 (le rapport de division pouvant être égal à 1). Le circuit 35 démodule la tension Vac et décode le signal reçu pour en extraire les bits bs, b0, b1, b2... d'une suite de bits asynchrones (figure 1). La sortie du circuit 35 est appliquée sur un port P1 de l'unité CPU. Dans cette application, l'entrée I1 du générateur d'événements EVTGEN est connectée au port P1 de l'unité CPU (noeud A) et l'entrée I2 est connectée à la sortie du compteur TMR délivrant le drapeau FLZ. Le générateur EVTGEN est prévu pour délivrer un code événement CED1 quand le signal présent sur le port I1 passe à 0, et un code événement CED2 quand le drapeau FLZ passe à 0. La séquence de programme décrite au préambule, concernant la réception de la suite de bits bs, b0, b1... de période Te, est exécutée comme suit :

i) l'unité CPU envoie au détecteur EVTDET le code

$$CODE_{EW} = CED1$$

du premier événement E1 à attendre (correspondant à l'apparition du bit de start bs sur le port P1), ii) l'unité CPU présente sur le bus 15 la consigne de comptage VAL1 (correspondant au comptage d'un temps Te/2) qui se retrouve ainsi à l'entrée du compteur TMR (la consigne peut, optionnellement, être enregistrée dans un registre tampon du compteur TMR), iii) ces étapes préparatoires étant effectuées, l'unité CPU active le détecteur EVTDET au moyen du signal EW.

Quelques instants plus tard, le passage à 0 du port P1 est détecté par le générateur EVTGEN qui délivre immédiatement le code

$$CODE_{ED} = CED1$$

au détecteur EVTDET. Ce dernier compare le code CED1 au code $CODE_{EW}$ de l'événement à surveiller. L'identité des codes étant vérifiée, le détecteur EVTDET délivre immédiatement le signal LOAD au compteur TMR, puis délivre à l'unité CPU le signal ED indiquant que l'événement attendu s'est produit. Par "immédiatement", on entend une opération quasi instantanée, faite dans un intervalle de temps très court correspondant aux temps de commutation des diverses portes logiques constituant les circuits EVTGEN et EVTDET.

Ainsi, grâce à l'invention, le chargement de la consigne VAL1 dans le compteur TMR est pratiquement simultané à la réalisation de l'événement attendu. Après avoir reçu le signal ED, l'unité CPU poursuit l'exécution du programme enregistré dans la mémoire MEM, c'est-à-dire prépare l'attente de l'événement suivant E2 (correspondant à l'écoulement de l'intervalle de temps Te/2). A cet effet, l'unité CPU répète les opérations 1) et ii) ci-dessus. La valeur VAL2 (attente pendant un temps Te) est maintenant présentée à l'entrée du compteur TMR et que le code événement fourni au détecteur EVTDET est le code CED2. Lorsque le drapeau FLZ passe à 0, la consigne VAL2 est immédiatement chargée dans le compteur TMR et l'unité CPU procède à la lecture du bit bs. Les opérations de lecture des bits suivants b0, b1... (événements E3, E4...) sont identiques à la précédente et répétitives.

En résumé, la prévision d'un circuit spécifique à logique câblée assurant la détection des événements et le déclenchement immédiat du chargement du compteur TMR permet d'éviter une accumulation de retards qui pourraient conduire à la perte d'un bit.

Ces avantages de l'invention se retrouvent pour l'émission d'une suite de bits conforme à celle de la figure 1. Dans ce cas, l'unité CPU envoie le code événement VAL2 (FLZ = 0) au détecteur EVTDET, prépare la valeur VAL2 à l'entrée du compteur TMR, applique elle-même le signal LOAD au compteur TMR et applique simultanément le signal d'activation EW au détecteur EVTDET. Lorsque le temps Te est expiré et que le drapeau FLZ passe à 0, la consigne VAL2 est toujours présente en entrée du compteur TMR et est rechargée automatiquement par le détecteur EVTDET. Le détecteur EVTDET envoie ensuite le signal ED à l'unité CPU qui émet le premier bit b0. Grâce à l'invention, le retard pouvant intervenir entre le passage à 0 du drapeau FLZ et l'envoi d'un bit b0, b1, b2, b3... par l'unité CPU n'est pas cumulatif car ce retard ne concerne pas le compteur TMR qui est rechargé immédiatement après l'expiration de l'intervalle de temps précédent.

D'autre part, selon un aspect optionnel mais avantageux de l'invention le coeur du microprocesseur, ici l'unité CPU, est désactivé pendant les périodes d'attente d'un événement. Dans le mode de réalisation illustré sur la figure 3, cette désactivation est obtenue en supprimant l'application de l'horloge interne H1 à l'unité CPU au moyen d'un interrupteur SW. L'interrupteur SW est piloté par le détecteur EVTDET et est placé dans l'état ouvert (non passant) quant le détecteur EVTDET reçoit le signal d'activation EW, puis est à nouveau fermé lorsque l'événement attendu se réalise (émission du signal ED). Ainsi, pendant les périodes d'attente d'un événement, le microprocesseur est désactivé et ne consomme pas de courant.

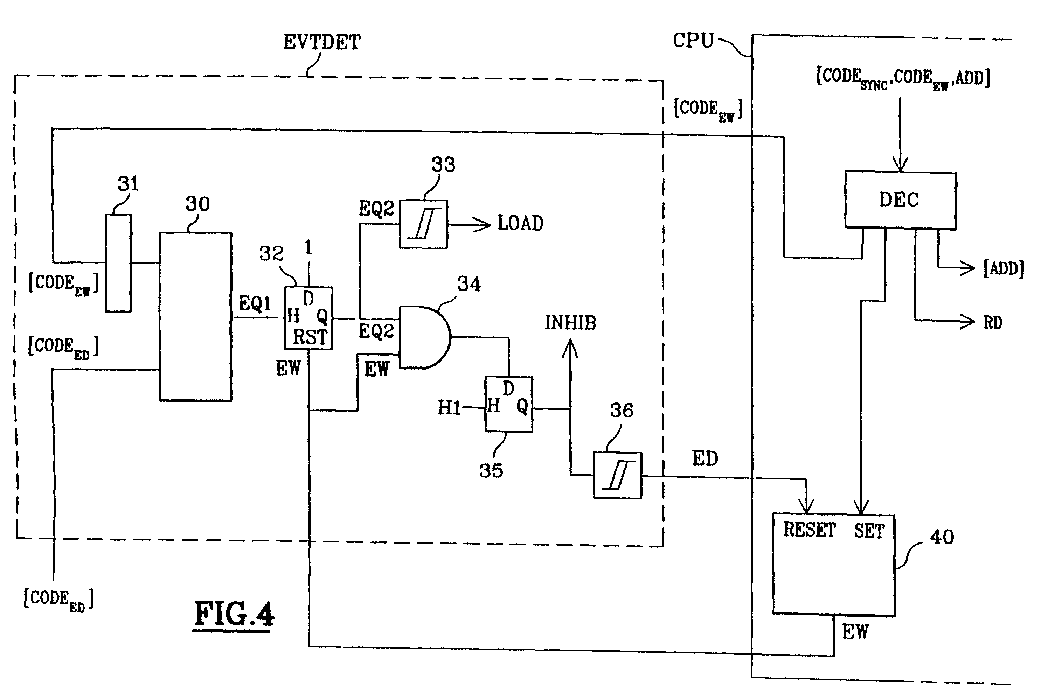

La figure 4 illustre un exemple de réalisation du détecteur EVTDET. L'entrée EV1 du détecteur est connectée à une première entrée d'un comparateur logique 30. L'entrée EV2 est connectée à une deuxième entrée du comparateur 30 par l'intermédiaire d'un registre tampon 31 permettant de conserver le code $CODE_{EW}$ à l'entrée du comparateur 30. La sortie du comparateur 30 délivre un signal EQ1 appliqué sur l'entrée d'horloge H d'une bascule D de référence 32 dont l'entrée D est maintenue à 1. La bascule 32 reçoit sur son entrée de remise à zéro RST le signal d'activation EW et délivre sur sa sortie Q un signal EQ2. Le signal EQ2 est appliqué en entrée d'un circuit monostable 33 délivrant le signal LOAD ainsi qu'en entrée d'une porte ET 34 recevant sur son autre entrée le signal d'activation EW. La sortie de la porte ET 34 est appliquée sur l'entrée D d'une bascule D 35 recevant sur son entrée d'horloge H le signal d'horloge interne H1 du microprocesseur. La sortie Q de la bascule 35 délivre un signal INHIB de pilotage de l'interrupteur SW (voir aussi figure 3). Le signal INHIB est également appliqué en entrée d'un circuit monostable 36 dont la sortie délivre le signal ED ("événement détecté"). Enfin, les bascules 32 et 35 sont à front descendant, c'est-à-dire déclenchées par le passage à 0 de leurs entrées d'horloge H respectives, les sorties Q recopiant alors les entrées D.

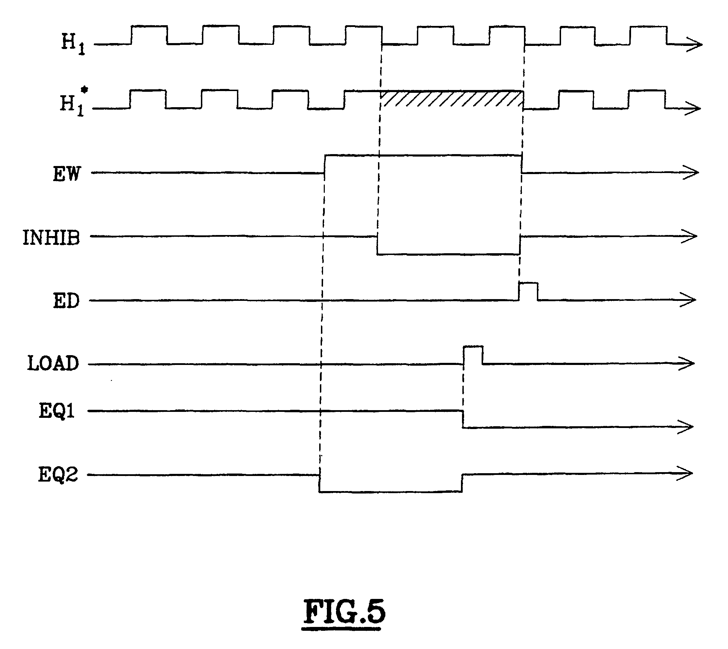

Le fonctionnement du détecteur EVTDET est illustré par le chronogramme de la figure 5. Le signal d'activation EW, normalement à 0, est mis à 1 par l'unité CPU après chargement d'un code événement $CODE_{EW}$ dans le registre tampon 31. Le signal EQ2 passe à 0 ainsi que la sortie de la porte 34. A cet instant, on suppose par exemple que signal d'horloge interne H1 est à 0. Au cours du front descendant suivant du signal d'horloge H1, la bascule 35 se déclenche et recopie en sortie la valeur 0 présente sur son entrée D. Le signal INHIB passe à 0 et l'interrupteur SW est ouvert, de sorte que l'unité CPU ne reçoit plus le signal d'horloge H1 (sur la figure 5, le signal d'horloge reçu par l'unité CPU est référencé H1*, pour le distinguer du signal permanent H1 délivré par le générateur CGEN).

Quand l'événement attendu se réalise, les codes $CODE_{EW}$ et $CODE_{ED}$ sont égaux et le signal EQ1 passe à 0. Le signal EQ2 passe à 1 et la sortie du monostable 33 délivre le signal de chargement LOAD sous la forme d'une impulsion. Simultanément, la sortie de la porte ET 34 passe à 1. A cet instant, on suppose à nouveau que le signal d'horloge interne H1 est à 0. Au cours du front descendant suivant du signal d'horloge H1, la bascule 35 se déclenche et recopie en sortie la valeur 1 présente sur son entrée D. Le signal INHIB passe à 1 et l'interrupteur SW est refermé, de sorte que l'unité CPU est réactivée. Simultanément, le monostable 36 délivre le signal ED ("événement détecté") à l'unité CPU, sous la forme d'une impulsion.

Ainsi, le mode de réalisation qui vient d'être décrit permet d'interrompre et de rétablir le signal d'horloge H1 au même moment, ici sur un front descendant d'horloge, de sorte que le fonctionnement de l'unité CPU n'est pas perturbé. Plus précisément, l'unité CPU ne "s'aperçoit" pas qu'elle a été mise en sommeil et reprend les opérations là où elle avait été interrompue par sa mise en sommeil. Dans ces conditions, l'attente d'un événement ne nécessite aucune scrutation du signal ED, et la remise en service de l'unité CPU est immédiate après l'émission du signal ED.

La partie droite de la figure 4 représente très schématiquement la structure interne de l'unité CPU. On y trouve un décodeur d'instruction DEC et une bascule D 40 dont la sortie Q délivre le signal EW ("attente événement"). Le décodeur DEC, en lui-même classique, a pour fonction d'interpréter les instructions reçues de la mémoire programme MEM et de cadencer leur exécution au sein de l'unité CPU.

Selon encore un autre aspect optionnel mais avantageux de l'invention, le décodeur DEC est agencé pour pouvoir traiter une instruction de synchronisation SYNC du type suivant :

| $CODE_{SYNC}$ | $CODE_{EW}$ | ADD |
|---|---|---|

comprenant un code opération $CODE_{SYNC}$, le code $CODE_{EW}$ d'un événement à attendre et une adresse ADD d'un registre de la banque REGBANK contenant une consigne de comptage VAL.

Le décodeur DEC, après lecture (cycle "fetch") de l'instruction SYNC dans la mémoire MEM et reconnaissance du code $CODE_{SYNC}$, procède aux opérations suivantes :

- le décodeur DEC stocke le code événement $CODE_{EW}$ dans le registre 31 du détecteur EVTDET,
- le décodeur DEC envoie l'adresse ADD sur le bus d'adresses 16, puis applique un signal de lecture RD à la banque REGBANK. La consigne de comptage VAL présente à cette adresse est présentée, par l'intermédiaire du bus de données 15, en entrée du compteur TMR (elle peut aussi être chargée dans un registre tampon du compteur TMR),
- ensuite, le décodeur DEC active le détecteur EVTDET en envoyant une impulsion de tension sur l'entrée SET de la bascule 40. Le signal EW passe à 1. Lorsque l'événement attendu se réalise, l'impulsion ED délivrée par le détecteur EVTDET (monostable 36) est appliquée sur l'entrée RESET de la bascule 40, ce qui provoque la remise à 0 du signal EW.

La prévision d'une telle instruction SYNC et d'un décodeur DEC capable d'exécuter cette instruction est un aspect pratique de l'invention permettant de simplifier considérablement le travail d'un programmeur et de faire appel à tout instant à la fonction de synchronisation selon l'invention.

Bien entendu, la présente invention est susceptible de diverses applications autres que celle qui vient d'être décrite en correspondance avec le problème technique exposé au préambule. Par exemple, l'invention est applicable à la synchronisation de processeurs asynchrones ne possédant pas les mêmes fréquences d'horloge. De façon générale, l'invention peut être mise en oeuvre dans tout type de microprocesseur et remplace avantageusement les méthodes de synchronisation classiques par scrutation ou interruption.

La présente invention est également susceptible de diverses variantes et modes de réalisation. L'instruction SYNC décrite plus haut peut contenir une consigne de comptage sous forme indexée, représentée par l'adresse d'un registre. Il est également possible d'incorporer directement la consigne de comptage dans l'instruction SYNC. Par ailleurs, le détecteur d'événements peut être d'une structure plus complexe permettant d'attendre simultanément deux événements. Dans ce cas, on peut superposer l'attente d'un événement relatif au changement de valeur d'un signal logique avec l'attente d'un événement correspondant à l'écoulement d'un intervalle de temps. Cette variante permet de définir une fenêtre temporelle d'attente et d'éviter que le microprocesseur ne reste bloqué dans un état de sommeil si l'événement attendu ne se réalise pas.

Enfin l'homme de l'art remarquera que la structure du détecteur d'événements décrit plus haut est très proche de celle d'un décodeur d'interruption classique, à la différence près qu'un décodeur d'interruption a pour fonction de générer un signal d'interruption et l'adresse d'un sous-programme d'interruption lorsqu'un événement attendu se réalise. Aussi, un mode de réalisation avantageux de l'invention consiste à fusionner dans un seul circuit la fonction d'un décodeur d'interruption classique et celle du détecteur d'événements selon l'invention.

## Revendications

1. Microprocesseur (10) comprenant une unité centrale (CPU) programmable, un compteur (TMR) pour mesurer un intervalle de temps (Te/2, Te) en fonction d'une consigne de comptage (VAL1, VAL2) et d'un signal d'horloge de comptage (H2), et des moyens (15) pour permettre à l'unité centrale de présenter sur une entrée du compteur une consigne de comptage, **caractérisé en ce qu'**il comprend des moyens à logique câblée (EVTDET, EVTGEN) de détection d'au moins un événement attendu (E1, E2, E3) agencés pour, lorsque l'événement attendu se réalise, appliquer immédiatement audit compteur un signal de chargement (LOAD) d'une consigne de comptage (VAL1, VAL2) présente à l'entrée du compteur, de telle sorte que le temps d'application du signal de chargement au compteur au moment où l'évènement se réalise est minimal, et correspond seulement à un temps de commutation de portes logiques du circuit de détection à logique câblée.

2. Microprocesseur selon la revendication 1, dans lequel les moyens de détection (EVTDET, EVTGEN) sont agencés pour détecter les événements (E1, E2, E3) suivants :

   - l'expiration d'un intervalle de temps (Te/2, Te) mesuré par le compteur, et
   - le changement de valeur d'un signal logique.

3. Microprocesseur selon l'une des revendications 1 et 2, dans lequel les moyens de détection (EVTDET, EVTGEN) sont programmables et comprennent au moins un registre (31) pour recevoir au moins un code ($CODE_{EW}$) d'au moins un événement à détecter.

4. Microprocesseur selon l'une des revendications 1 à 3, dans lequel les moyens de détection comprennent des moyens (INHIB, SW) pour désactiver le microprocesseur lorsqu'ils sont activés, et réactiver le microprocesseur lorsque l'événement attendu se réalise.

5. Microprocesseur selon la revendication 4, dans lequel les moyens de détection désactivent le microprocesseur en bloquant l'application d'un signal d'horloge interne (H1) à l'unité centrale (CPU).

6. Microprocesseur selon l'une des revendications 1 à 5, **caractérisé en ce que** l'unité centrale comprend des moyens (DEC) de décodage et de traitement d'une instruction (SYNC) d'attente d'un événement, agencés pour, sur réception de l'instruction d'attente :

   - présenter à l'entrée du compteur une consigne de comptage (VAL1, VAL2),
   - fournir aux moyens de détection (EVTDET, EVTGEN) un code ($CODE_{EW}$) de l'événement à détecter, puis
   - activer (EW) les moyens de détection (EVTDET, EVTGEN).

7. Microprocesseur selon la revendication 6, dans lequel l'unité centrale comprend des moyens (DEC) de décodage et de traitement d'une instruction d'attente (SYNC) comprenant un code ($CODE_{EW}$) de l'événement à détecter et une consigne de comptage (ADD, VAL) sous forme directe (VAL) ou indexée (ADD).

8. Microprocesseur selon l'une des revendications précédentes, dans lequel les moyens de détection (EVTDET, EVTGEN) comprennent :

   - des moyens (EVTGEN) de production de codes événements ($CODE_{ED}$) lorsque des événements prédéterminés se produisent en des points prédéterminés du microprocesseur, et
   - des moyens de comparaison (EVTDET) d'un code événement ($CODE_{ED}$) délivré par les moyens de production (EVTGEN) avec le code événement ($CODE_{EW}$) d'un événement attendu.

9. Microprocesseur selon l'une des revendications précédentes, dans lequel le compteur reçoit un signal d'horloge de comptage (H2) différent d'un signal d'horloge interne (H1) du microprocesseur.

10. Microprocesseur selon l'une des revendications précédentes, comprenant des moyens (31, 34) pour extraire le signal d'horloge de comptage (H2) de la fréquence porteuse (Fac) d'un champ magnétique alternatif (FLD).

11. Procédé de synchronisation d'un microprocesseur avec un événement attendu (E1, E2, E3), le microprocesseur comprenant une unité centrale (CPU), un compteur (TMR) pour mesurer un intervalle de temps (Te/2, Te) en fonction d'une consigne de comptage (VAL1, VAL2) et d'un signal d'horloge de comptage (H2), et des moyens (15) pour permettre à l'unité centrale de présenter sur une entrée du compteur une consigne de comptage, **caractérisé en ce qu'**il comprend les étapes suivantes :

- prévoir un circuit (EVTDET) à logique câblée pour détecter l'événement attendu,
- présenter une consigne de comptage (VAL1 VAL2) à l'entrée du compteur (TMR) au moyen de l'unité centrale, et
- lorsque l'événement attendu se réalise :

    - faire délivrer par le circuit de détection d'événement (EVTDET) un signal (LOAD) de chargement de la consigne de comptage, avec un délai minimal correspondant à un temps de commutation de portes logiques du circuit de détection à logique câblée, sans intervention de l'unité centrale (CPU),
    - appliquer immédiatement au compteur (TMR) le signal (LOAD) de chargement de la consigne de comptage (VAL1, VAL2) présente à l'entrée du compteur.

12. Procédé selon la revendication 11, dans lequel l'événement attendu (E2, E3) correspond à l'écoulement d'un intervalle de temps déterminé (Te/2, Te) mesuré par le compteur en fonction d'une consigne de comptage (VAL1, VAL2) précédemment chargée dans le compteur (TMR).

13. Procédé selon l'une des revendications 11 à 12, dans lequel le microprocesseur est désactivé (INHIB) pendant l'attente d'un événement.

14. Procédé selon la revendication 13, dans lequel le microprocesseur est réactivé après que le signal de chargement (LOAD) a été appliqué au compteur (TMR).

15. Procédé selon la revendication 14, dans lequel le microprocesseur est désactivé et réactivé par blocage et rétablissement d'un signal d'horloge interne (H1) appliqué au coeur (CPU) du microprocesseur.

16. Procédé selon l'une des revendications 11 à 15, dans lequel le circuit de détection d'évènement (EVTDET) est programmable et comprend au moins un registre (31) pour recevoir au moins un code évènement ($CODE_{EW}$) d'au moins un événement à détecter, comprenant une étape d'application au circuit de détection par l'unité centrale d'un code évènement de l'évènement attendu.

17. Procédé selon la revendication 16, dans lequel on prévoit un circuit (EVTGEN) de production de codes événements ($CODE_{ED}$) lorsque des événements prédéterminés se produisent en des points prédéterminés du microprocesseur, et on prévoit dans le circuit de détection d'évènement (EVTDET) des moyens de comparaison d'un code événement ($CODE_{ED}$) délivré par les moyens de production (EVTGEN) avec le code événement ($CODE_{EW}$) de l'événement attendu.

18. Procédé selon l'une des revendications 11 à 17, dans lequel un évènement attendu est la réception d'un bit d'une suite de bits.

19. Procédé selon la revendication 18, comprenant l'application au compteur d'une première consigne de comptage (VAL1, Te/2) avant la réception d'un premier bit de la suite de bit, et l'application au compteur d'une deuxième consigne de comptage (VAL2, Te) avant la réception d'autres bits de la suite de bits.

**Patentansprüche**

1. Mikroprozessor (10), der eine programmierbare Zentraleinheit (CPU) umfasst, einen Zähler (TMR) zum Messen eines Zeitintervalls (Te/2, Te) in Abhängigkeit von einem Zählsollwert (VAL1, VAL2) und einem Zähltaktgebersignal (H2), und Mittel (15), um es der Zentraleinheit zu erlauben, auf einem Eingang des Zählers einen Zählsollwert zu präsentieren, **dadurch gekennzeichnet, dass** er Mittel mit fest verdrahteter Logik (EVTDET, EVTGEN) zum Erfassen mindestens eines erwarteten Ereignisses (E1, E2, E3) umfasst, die eingerichtet sind, um, wenn das erwartete Ereignis eintritt, an den Zähler unverzüglich ein Ladesignal (LOAD) eines Zählsollwerts (VAL1, VAL2) anzulegen, welcher am Eingang des Zählers gegenwärtig ist, so dass die Anlegezeit des Ladesignals an den Zähler in dem Augenblick, in dem das Ereignis eintritt, minimal ist und nur einer Umschaltzeit von Logikgattern des Erfassungsschaltkreises mit fest verdrahteter Logik entspricht.

2. Mikroprozessor nach Anspruch 1, bei dem die Mittel zum Erfassen (EVTDET, EVTGEN) eingerichtet sind, um die folgenden Ereignisse (E1, E2, E3) zu erfassen:

    - das Ablaufen eines Zeitintervalls (Te/2, Te), das der Zähler gemessen hat, und

    - das Wechseln des Werts eines logischen Signals.

3. Mikroprozessor nach einem der Ansprüche 1 und 2, bei dem die Mittel zum Erfassen (EVTDET, EVTGEN) programmierbar sind und mindestens ein Register (31) umfassen, um mindestens einen Code (CODE$_{EW}$) mindestens eines zu erfassenden Ereignisses aufzunehmen.

4. Mikroprozessor nach einem der Ansprüche 1 bis 3, bei dem die Mittel zum Erfassen Mittel (INHIB, SW) umfassen, um den Mikroprozessor, wenn die Mittel aktiviert werden, zu deaktivieren, und den Mikroprozessor, wenn das erwartete Ereignis eintritt, wieder zu aktivieren.

5. Mikroprozessor nach Anspruch 4, bei dem die Mittel zum Erfassen den Mikroprozessor deaktivieren, indem sie das Anlegen eines internen Taktgebersignals (H1) an die Zentraleinheit (CPU) blockieren.

6. Mikroprozessor nach einem der Ansprüche 1 bis 5, **dadurch gekennzeichnet, dass** die Zentraleinheit Mittel (DEC) zum Decodieren und Verarbeiten einer Anweisung (SYNC) zum Warten auf ein Ereignis umfasst, die eingerichtet sind, um beim Empfang der Warteanweisung:

   - am Eingang des Zählers einen Zählsollwert (VAL1, VAL2) zu präsentieren,

   - den Mitteln zum Erfassen (EVTDET, EVTGEN) einen Code (CODE$_{EW}$) des zu erfassenden Ereignisses zu liefern und dann

   - die Mittel zum Erfassen (EVTDET, EVTGEN) zu aktivieren (EW).

7. Mikroprozessor nach Anspruch 6, **dadurch gekennzeichnet, dass** die Zentraleinheit Mittel (DEC) zum Decodieren und zum Verarbeiten einer Warteanweisung (SYNC) umfasst, die einen Code (CODE$_{EW}$) des zu erfassenden Ereignisses und einen Zählsollwert (ADD, VAL) in direkter Form (VAL) oder indexierter Form (ADD) umfasst.

8. Mikroprozessor nach einem der vorhergehenden Ansprüche, bei dem die Mittel zum Erfassen (EVTDET, EVTGEN) Folgendes umfassen:

   - Mittel (EVTGEN) zum Erzeugen von Ereigniscodes (CODE$_{ED}$), wenn vorausbestimmte Ereignisse an vorausbestimmten Stellen des Mikroprozessors auftreten, und

   - Mittel zum Vergleichen (EVTDET) eines Ereigniscodes (CODE$_{ED}$), der von den Mitteln zur Produktion (EVTGEN) geliefert wird, mit dem Ereigniscode (CODE$_{EW}$) eines erwarteten Ereignisses.

9. Mikroprozessor nach einem der vorhergehenden Ansprüche, bei dem der Zähler ein Zähltaktgebersignal (H2) empfängt, das anders ist als ein internes Taktgebersignal (H1) des Mikroprozessors.

10. Mikroprozessor nach einem der vorhergehenden Ansprüche, der Mittel (31, 34) umfasst, um das Zähltaktgebersignal (H2) aus der Trägerfrequenz (Fac) eines magnetischen Wechselfelds (FLD) zu extrahieren.

11. Verfahren zur Synchronisation eines Mikroprozessors mit einem erwarteten Ereignis (E1, E2, E3), wobei der Mikroprozessor eine Zentraleinheit (CPU), einen Zähler (TMR) zum Messen eines Zeitintervalls (Te/2, Te) in Abhängigkeit von einem Zählsollwert (VAL1, VAL2) und einem Zähltaktgebersignal (H2) umfasst, und Mittel (15), um es der Zentraleinheit zu erlauben, auf einem Eingang des Zählers einen Zählsollwert zu präsentieren, **dadurch gekennzeichnet, dass** es die folgenden Schritte umfasst:

   - Vorsehen eines Schaltkreises (EVTDET) mit fest verdrahteter Logik zum Erfassen des erwarteten Ereignisses,

   - Präsentieren eines Zählsollwerts (VAL1, VAL2) am Eingang des Zählers (TMR) mittels der Zentraleinheit, und

   - wenn das erwartete Ereignis eintritt:

      - Liefern durch den Ereigniserfassungsschaltkreis (EVTDET) eines Signals (LOAD) zum Laden des Zählsollwerts mit einer Mindestfrist, die einer Umschaltzeit von Logikgattern des Erfassungsschaltkreises mit fest verdrahteter Logik entspricht, ohne Eingriff der Zentraleinheit (CPU),

      - unverzügliches Anlegen an den Zähler (TMR) des Signals (LOAD) zum Laden des Zählsollwerts (VAL1, VAL2).

12. Verfahren nach Anspruch 11, bei dem das erwartete Ereignis (E2, E3) dem Ablaufen eines bestimmten Zeitintervalls (Te/2, Te) entspricht, das von dem Zähler in Abhängigkeit von einem Zählsollwert (VAL1, VAL2), der zuvor in den Zähler (TMR) geladen wurde, gemessen wird.

13. Verfahren nach einem der Ansprüche 11 bis 12, bei dem der Mikroprozessor während des Wartens auf ein Ereignis deaktiviert (INHIB) ist.

14. Verfahren nach Anspruch 13, bei dem der Mikroprozessor wieder aktiviert wird, nachdem das Ladesignal (LOAD) an den Zähler (TMR) angelegt wurde.

**15.** Verfahren nach Anspruch 14, bei dem der Mikroprozessor durch Blockieren und Wiederherstellen eines internen Taktgebersignals (H1), das an das Herzstück (CPU) des Mikroprozessors angelegt wird, deaktiviert und wieder aktiviert wird.

**16.** Verfahren nach einem der Ansprüche 1 bis 15, bei dem der Ereigniserfassungsschaltkreis (EVTDET) programmierbar ist und mindestens ein Register (31) umfasst, um mindestens einen Ereigniscode ($CODE_{EW}$) mindestens eines zu erfassenden Ereignisses aufzunehmen, das einen Schritt des Anlegens eines Ereigniscodes des erwarteten Ereignisses an den Erfassungsschaltkreis durch die Zentraleinheit umfasst.

**17.** Verfahren nach Anspruch 16, bei dem man einen Schaltkreis (EVTGEN) zum Erzeugen von Ereigniscodes ($CODE_{ED}$) vorsieht, wenn vorausbestimmte Ereignisse an vorausbestimmten Stellen des Mikroprozessors auftreten, und man in dem Ereigniserfassungsschaltkreis (EVTDET) Mittel zum Vergleichen eines Ereigniscodes ($CODE_{ED}$), der von den Produktionsmitteln (EVTGEN) geliefert wird, mit dem Ereigniscode ($CODE_{EW}$) des erwarteten Ereignisses vorsieht.

**18.** Verfahren nach einem der Ansprüche 11 bis 17, bei dem ein erwartetes Ereignis der Empfang eines Bits einer Bitfolge ist.

**19.** Verfahren nach Anspruch 18, das das Anlegen eines ersten Zählsollwerts (VAL1, Te/2) an den Zähler vor dem Empfang eines ersten Bits der Bitfolge und das Anlegen eines zweiten Zählsollwerts (VAL2, Te) an den Zähler vor dem Empfang anderer Bits der Bitfolge umfasst.

**Claims**

**1.** A microprocessor (10) comprising a programmable central processing unit (CPU), a counter (TMR) for measuring a time interval (Te/2, Te) according to a counting set point (VAL1, VAL2) and a counting clock signal (H2), and means (15) for enabling the central processing unit to present a counting set point at one input of the counter, **characterised in that** it comprises hard-wired logic means (EVTDET, EVTGEN) for detecting at least one awaited event (E1, E2, E3) arranged for immediately applying to said counter, when the awaited event occurs, a load signal (LOAD) for loading a counting set point (VAL1, VAL2) present at the input of the counter, such that the time for applying the load signal to the counter at the moment the event occurs is minimal, and corresponds solely to a switching time of logic gates of the hard-wired logic detection circuit.

**2.** Microprocessor according to claim 1, wherein the detection means (EVTDET, EVTGEN) are arranged for detecting the following events (E1, E2, E3) :

- the expiry of a time interval (Te/2, Te) measured by the counter, and
- the change in value of a logic signal.

**3.** Microprocessor according to one of claims 1 and 2, wherein the detection means (EVTDET, EVTGEN) are programmable and comprise at least one register (31) for receiving at least one code ($CODE_{EW}$) of at least one event to be detected.

**4.** Microprocessor according to one of claims 1 to 3, wherein the detection means comprise means (INHIB, SW) for deactivating the microprocessor when they are activated, and reactivating the microprocessor when the awaited event occurs.

**5.** Microprocessor according to claim 4, wherein the detection means deactivate the microprocessor by blocking the application of an internal clock signal (H1) to the central processing unit (CPU).

**6.** Microprocessor according to one of claims 1 to 5, **characterised in that** the central processing unit comprises means (DEC) for decoding and processing an event wait instruction (SYNC), arranged for, upon receiving the wait instruction:

- presenting a counting set point (VAL1, VAL2) at the input of the counter,
- supplying the detection means (EVTDET, EVTGEN) with a code ($CODE_{EW}$) of the event to be detected, then,
- activating (EW) the detection means (EVTDET, EVTGEN) .

**7.** Microprocessor according to claim 6, wherein the central processing unit comprises means (DEC) for decoding and processing a wait instruction (SYNC) comprising a code ($CODE_{EW}$) of the event to be detected and a counting set point (ADD, VAL) in direct (VAL) or indexed (ADD) form.

**8.** Microprocessor according to one of the preceding claims, wherein the detection means (EVTDET, EVTGEN) comprise:

- means (EVTGEN) for producing event codes ($CODE_{ED}$) when predetermined events occur at predetermined points of the microprocessor, and
- means for comparing (EVTDET) an event code ($CODE_{ED}$) delivered by the production means (EVTGEN) with the event code ($CODE_{EW}$) of an awaited event.

**9.** Microprocessor according to one of the preceding claims, wherein the counter receives a counting clock signal (H2) that is different to an internal clock signal (H1) of the microprocessor.

**10.** Microprocessor according to one of the preceding claims, comprising means (31, 34) for extracting the counting clock signal (H2) from the carrier frequency (Fac) of an alternating magnetic field (FLD).

**11.** A method for synchronising a microprocessor with an awaited event (E1, E2, E3), the microprocessor comprising a central processing unit (CPU), a counter (TMR) for measuring a time interval (Te/2, Te) according to a counting set point (VAL1, VAL2) and a counting clock signal (H2), and means (15) for enabling the central processing unit to present a counting set point at one input of the counter, **characterised in that** it comprises the steps of:

- providing a hard-wired logic circuit (EVTDET) for detecting the awaited event,
- presenting a counting set point (VAL1, VAL2) at the input of the counter (TMR) by means of the central processing unit, and
- when the awaited event occurs:

  - causing the event detection circuit (EVTDET) to deliver a load signal (LOAD) for loading the counting set point, with a minimum delay corresponding to a switching time of logic gates of the hard-wired logic detection circuit, without the central processing unit (CPU) intervening,
  - immediately applying to the counter (TMR) the load signal (LOAD) for loading the counting set point (VAL1, VAL2).

**12.** Method according to claim 11, wherein the awaited event (E2, E3) corresponds to the elapsing of a determined time interval (Te/2, Te) measured by the counter according to a counting set point (VAL1, VAL2) previously loaded into the counter (TMR).

**13.** Method according to one of claims 11 to 12, wherein the microprocessor is deactivated (INHIB) during the wait for an event.

**14.** Method according to claim 13, wherein the microprocessor is reactivated after the load signal (LOAD) has been applied to the counter (TMR).

**15.** Method according to claim 14, wherein the microprocessor is deactivated and reactivated by blocking and restoring an internal clock signal (H1) applied to the core (CPU) of the microprocessor.

**16.** Method according to one of claims 11 to 15, wherein the event detection circuit (EVTDET) is programmable and comprises at least one register (31) for receiving at least one event code ($CODE_{EW}$) of at least one event to be detected, comprising a step in which the central processing unit applies an event code of the awaited event to the detection circuit.

**17.** Method according to claim 16, wherein a circuit (EVIGEN) is provided for producing event codes ($CODE_{ED}$) when predetermined events occur at predetermined points of the microprocessor, and means are provided, in the event detection circuit (EVTDET), for comparing an event code ($CODE_{ED}$) delivered by the production means (EVTGEN) with the event code ($CODE_{EW}$) of the awaited event.

**18.** Method according to one of claims 11 to 17, wherein an awaited event is the receipt of one bit in a sequence of bits.

**19.** Method according to claim 18, comprising the application to the counter of a first counting set point (VAL1, Te/2) before a first bit in the sequence of bits is received, and the application to the counter of a second counting set point (VAL2, Te) before other bits in the sequence of bits are received.

$$\underline{\text{FIG.1}}$$

$$\underline{\text{FIG.2}}$$

12

# FIG.3

FIG.4

## FIG.5